# EUROPEAN PATENT APPLICATION

(11) **EP 4 694 360 A1**
(43) Date of publication of application: **11.02.2026**
(21) Application number: 24818268.5
(22) Date of filing: 07.02.2024
(51) Int. Cl.: H04W 48/16

(54) **COMMUNICATION METHOD, COMMUNICATION APPARATUS, AND COMPUTER-READABLE STORAGE MEDIUM**

(30) Priority: 06.06.2023 CN 202310667500
(71) Applicant: ZTE Corporation, Shenzhen, Guangdong 518057 (CN)
(72) Inventor: WANG, Xiyu, Shenzhen, Guangdong 518057 (CN); WU, Feng, Shenzhen, Guangdong 518057 (CN); WANG, Lingbin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/076694
(87) International publication number: WO 2024/250731

(57) **Abstract**

Disclosed are a communication method, a communication apparatus, and a computer-readable storage medium. The communication method comprises: acquiring signal quality information of each access point in an access point cluster, wherein the access point cluster comprises at least two access points; determining, from the access point cluster, an access point of which the signal quality information meets a first preset requirement to be a first access point; and initiating a random access process by means of the first access point, so as to access the access point cluster.

## Description

The present disclosure claims a priority to Chinese Patent Application No. 202310667500.X, and filed on June 06, 2023, the entire content of which is incorporated into the present application by reference.

### TECHNICAL FIELD

The present disclosure relates to the field of communication technologies, and in particular, to a communication method, a communication apparatus, and a computer readable storage medium.

### BACKGROUND

Since the cellular network has the characteristics of improving spectrum utilization and facilitating expansion, the cellular network may be used as a basic network for mobile communications. In the cellular network, respective cells are independent of each other. If the terminal device moves, the terminal device needs to perform switching between a plurality of cells in the above-mentioned cellular network, so that the terminal device may continuously access cells with higher signal quality, thereby ensuring the quality of service of the terminal device.

### SUMMARY

In an aspect, a communication method is provided, and applied to a terminal device. The communication method includes: acquiring signal quality information of respective access points in an access point cluster, where the access point cluster includes at least two access points; determining an access point with signal quality information satisfying a first preset requirement from the access point cluster as a first access point; and initiating a random access procedure through the first access point, to access the access point cluster.

In another aspect, a communication method is provided, and applied to a base station. The communication method includes: performing a random access procedure with a terminal device through a first access point in an access point cluster, so that the terminal device accesses the access point cluster, where the access point cluster includes at least two access points, and the first access point is an access point with signal quality information satisfying a first preset requirement from the access point cluster.

In yet another aspect, a communication apparatus is provided, and applied to a terminal device. The communication apparatus includes: a communication unit and a determining unit. The communication unit is configured to acquire signal quality information of respective access points in an access point cluster, where the access point cluster includes at least two access points. The determining unit is configured to determine an access point with signal quality information satisfying a first preset requirement from the access point cluster as a first access point. The determining unit is further configured to initiate a random access procedure through the first access point, to access the access point cluster.

In yet another aspect, a communication apparatus is provided, and applied to a base station. The communication apparatus includes: a communication unit and a determining unit. The determining unit is configured to indicate the communicating unit to perform a random access procedure with a terminal device through a first access point in the access point cluster, so that the terminal device accesses the access point cluster, where the access point cluster includes at least two access points, and the first access point is an access point with signal quality information satisfying a first preset requirement in the access point cluster.

In yet another aspect, a communication apparatus is provided, and the communication apparatus includes: a memory and a processor. The memory and the processor are coupled with each other; the memory is configured to store a computer program; the processor, when executing the computer program, implements the communication method described in any one of the above aspects.

In yet another aspect, a computer readable storage medium is provided and the computer readable storage medium has stored computer program instructions thereon, and the computer program instructions, when executed by a processor, implement the communication method described in any one of the above aspects.

In yet another aspect, a computer program product is provided, the computer program product includes computer program instructions, and the computer program instructions, when executed by a processor, implement the communication method described in any one of the above aspects.

### BRIEF DESCRIPTION OF THE DRAWINGS

In order to illustrate technical solutions in the present disclosure more clearly, the drawings that some embodiments of the present disclosure need to use, will be briefly introduced below, and obviously, the drawings in the following description are merely drawings of some embodiments of the present disclosure, and other drawings may also be obtained according to these drawings for the ordinary skilled in the art.
FIG. 1 is a schematic diagram of a cell, according to some embodiments of the present disclosure.
FIG. 2 is a schematic diagram of a single-layer cellular network, according to some embodiments of the present disclosure.
FIG. 3 is a schematic diagram of a cell switching, according to some embodiments of the present disclosure.
FIG. 4 is a schematic diagram of a multi-layer cellular network, according to some embodiments of the present disclosure.
FIG. 5 is a schematic diagram of another cell switching, according to some embodiments of the present disclosure.
FIG. 6 is a schematic diagram of a carrier aggregation, according to some embodiments of the present disclosure.
FIG. 7A is a schematic diagram of a cell deployment, according to some embodiments of the present disclosure.
FIG. 7B is a schematic diagram of another cell deployment, according to some embodiments of the present disclosure.
FIG. 7C is a schematic diagram of yet another cell deployment, according to some embodiments of the present disclosure.
FIG. 8 is a structural schematic diagram of a communication system, according to some embodiments of the present disclosure.
FIG. 9 is a flow chart of a communication method, according to some embodiments of the present disclosure.
FIG. 10 is a schematic diagram of a process for determining an access cluster, according to some embodiments of the present disclosure.
FIG. 11 is a flow chart of another communication method, according to some embodiments of the present disclosure.
FIG. 12 is a schematic diagram of a broadcast procedure of access configuration information, according to some embodiments of the present disclosure.
FIG. 13 is a flow chart of yet another communication method, according to some embodiments of the present disclosure.
FIG. 14 is a schematic diagram of a data transmission between a terminal device and an access point, according to some embodiments of the present disclosure.
FIG. 15 is a schematic diagram of another data transmission between a terminal device and an access point, according to some embodiments of the present disclosure.
FIG. 16 is a flow chart of yet another communication method, according to some embodiments of the present disclosure.
FIG. 17A is a schematic diagram of a process for activating/deactivating an access point, according to some embodiments of the present disclosure.
FIG. 17B is a schematic diagram of another process for activating/deactivating an access point, according to some embodiments of the present disclosure.
FIG. 18 is a flow chart of yet another communication method, according to some embodiments of the present disclosure.
FIG. 19 is a flow chart of yet another communication method, according to some embodiments of the present disclosure.
FIG. 20 is a structural schematic diagram of a communication apparatus, according to some embodiments of the present disclosure.
FIG. 21 is a structural schematic diagram of another communication apparatus, according to some embodiments of the present disclosure.

### DETAILED DESCRIPTION

In order to enable those skilled in the art to better understand the technical solutions of the present disclosure, the technical solutions in the present disclosure will be described clearly and completely below in conjunction with the drawings in the present disclosure. Obviously, the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

It should be noted that in the present disclosure, the words such as "exemplary (exemplarily)" or "for example (e.g.)", etc., are used to present an example, illustration, or explanation. Any embodiment or design solution described as "exemplarily (exemplarily)", etc., in the present disclosure should not be construed as preferred or advantageous over other embodiments or design solutions. Rather, the usage of the words, such as "exemplary (exemplarily) or "for example", is intended to present relevant concepts in a specific manner.

Hereinafter, the terms such as "first", "second", etc., are used only for descriptive purposes and cannot be construed as indicating or implying relative importance or implicitly indicating the number of the indicated technical features. Thus, features defined with "first" or "second", etc., may explicitly or implicitly include one or more such features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may represent three cases: only A, only B, and both A and B. In addition, "at least one" means one or more, and "multiple/plurality of" means two or more.

Terms involved in the embodiments of the present disclosure will be explained below to facilitate readers' understanding.

### I. Cell

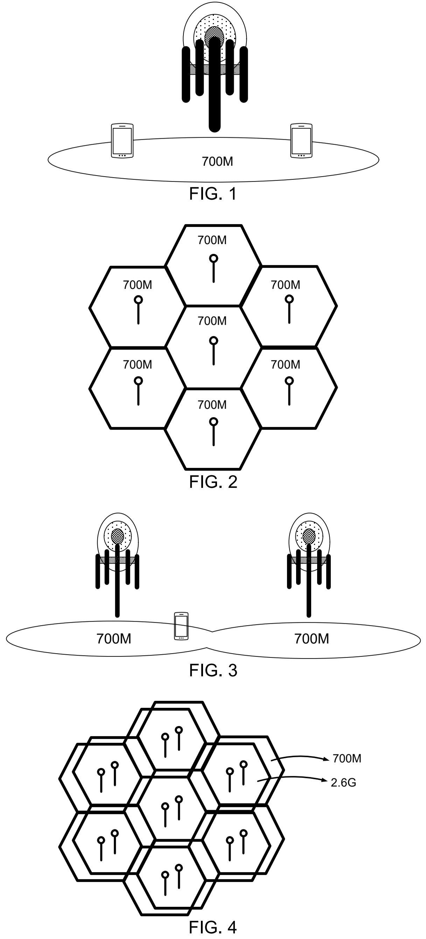

A logical concept established to manage a segment of continuous carriers is referred to as a cell. However, a cell may correspond not only to a segment of continuous carriers, but also to a series of hardware resources (for example, an antenna feed (also referred to as antenna system), a remote radio unit (RRU), a baseband unit (base band unit, BBU), a control system, and a baseband system) to facilitate the completion of various protocol stack functions. In this way, as shown in FIG. 1, a cell may manage a segment of fixed-size and continuous carriers (for example, 700 megabits (M)) and implement related access network protocol stack functions to cover an area, thereby providing data services to terminal devices in the area.

It should be noted that, in order to constrain the implementation complexity of software and hardware, relevant communication protocols (for example, the 4th generation mobile communication technology (4G) protocol and the 5th generation mobile communication technology (5G) protocol) have limited the carrier bandwidth range corresponding to the cell. For example, the 4G protocol sets a maximum carrier bandwidth corresponding to a cell to 20 Mbps (i.e., 1024-point fast Fourier transform (FFT)) and the minimum carrier bandwidth corresponding to a cell to 1.4 Mbps. For another example, in a 5G network, although different subcarrier spacings (SCS) correspond to different maximum carrier bandwidths, the maximum number of FFT points corresponding to each cell is 4096. In this way, constraint on the maximum number of FFT points for each cell avoids the problem of increased hardware costs due to the maximum number of FFT points exceeding expectations.

### II. Cellular network

The cellular network refers to a service area divided into a plurality of adjacent cellular cells (i.e., a cell with an approximately hexagonal coverage area), and frequency reuse technology is adopted so that some or all of these cellular cells use a common frequency. Because the cellular network has the characteristics of improving spectrum utilization and facilitating expansion, the cellular network has long been used as a basic network for mobile communications.

The above-mentioned cellular network may include a single-layer cellular network and a multi-layer cellular network. The single-layer cellular network and the multi-layer cellular network are explained respectively below.

The single-layer cellular network refers to a plurality of cellular adjacent cells corresponding to a frequency, and respective cellular cells are relatively independent and have clear boundaries to facilitate the subsequent implementation of spatial reuse. For example, as shown in FIG. 2, there are a plurality of cellular adjacent cells corresponding to the 700 MHz frequency (i.e., a cellular network corresponding to the 700 MHz frequency).

In the above-mentioned single-layer cellular network, if a terminal device wants to move from a cell to another cell in the above-mentioned single-layer cellular network, the terminal device needs to suspend the current service, perform a switching procedure, and resume a normal operation of the above-mentioned current service after the switching is completed. For example, as shown in FIG. 3, the terminal device may move from a cell to another cell in the cellular network corresponding to the 700 MHz frequency.

A multi-layer cellular network refers to a plurality of cellular neighboring cells corresponding to each frequency of a plurality of frequencies. In this way, the plurality of cellular adjacent cells corresponding to each frequency extend spatially to form a cellular network. For example, as shown in FIG. 4, the multi-layer cellular network includes: a plurality of cellular neighboring cells (i.e., the cellular network corresponding to the 700 MHz frequency) corresponding to the 700 MHz frequency, and a plurality of cellular neighboring cells corresponding to the 2.6 GHz frequency (i.e., the cellular network corresponding to the 2.6 GHz frequency).

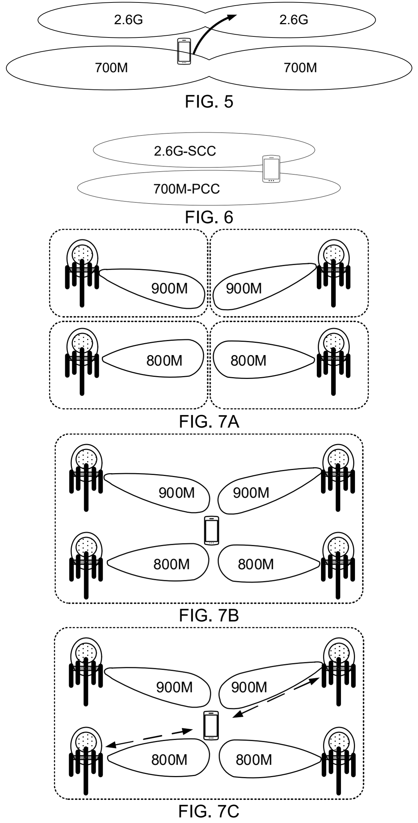

In the above-mentioned multi-layer cellular network, if a terminal device wants to move from a cell to another cell in the above-mentioned multi-layer cellular network, the terminal device needs to suspend the current service, perform a switching procedure, and resume a normal operation of the above-mentioned current service after the switching is completed. For example, as shown in FIG. 5, the terminal device may move from a cell in a cellular network corresponding to a 700 MHz frequency to a cell in a cellular network corresponding to a 2.6 GHz frequency.

It should be noted that, since different terminal devices need to transmit data based on different frequency domain resources in an actual communication network, the above-mentioned multi-layer cellular network has higher practicality in the actual communication network.

### III. Carrier aggregation (carrier aggregation, CA) technology

CA refers to that an access network device aggregates a plurality of component carriers (CC) so that the aggregated carriers may jointly provide services for a terminal device, which may significantly improve the throughput of the terminal device. The carrier that establishes a radio resource control (RRC) connection with a terminal device is a primary component carrier (PCC), which may also be referred to as a primary cell (Pcell). The carriers of the above plurality of carries and except the primary component carrier are secondary component carriers (SCCs), which may also be referred to as secondary cells (Scells). For example, as shown in FIG. 6, the cellular network corresponding to the 700 MHz frequency may be PCC, and the cellular network corresponding to the 2.6 GHz frequency may be SCC.

It should be noted that, the initial new radio (NR) protocol specifies that an access network device may aggregate a maximum of 16 CCs. Bandwidths corresponding to respective CCs may be different, and maximum frequency ranges corresponding to respective CCs may be different. For example, a maximum frequency range corresponding to CC1 is 100 MHz, and a maximum frequency range corresponding to CC2 is 400 MHz. The spectrums corresponding to respective CC may be continuous or discrete.

It should be noted that, after the terminal device accesses a cell in the PCC, the cell may transmit configuration information of the cell in the SCC to the terminal device through an RRC signaling, so that the terminal device may identify the cell in the SCC and acquire data services from the cell in the SCC.

For example, the following is an example of RRC signaling. The RRC signaling may include information such as a physical cell identifier (PCI), downlink configuration (downlink Config Common), uplink configuration (uplink Config Common), and an access center frequency, so that the terminal device may identify the cell in the SCC based on the information in the above RRC signaling. For the description of the above RRC signaling, reference may be made to the descriptions in relevant protocols, which will not be repeated herein.

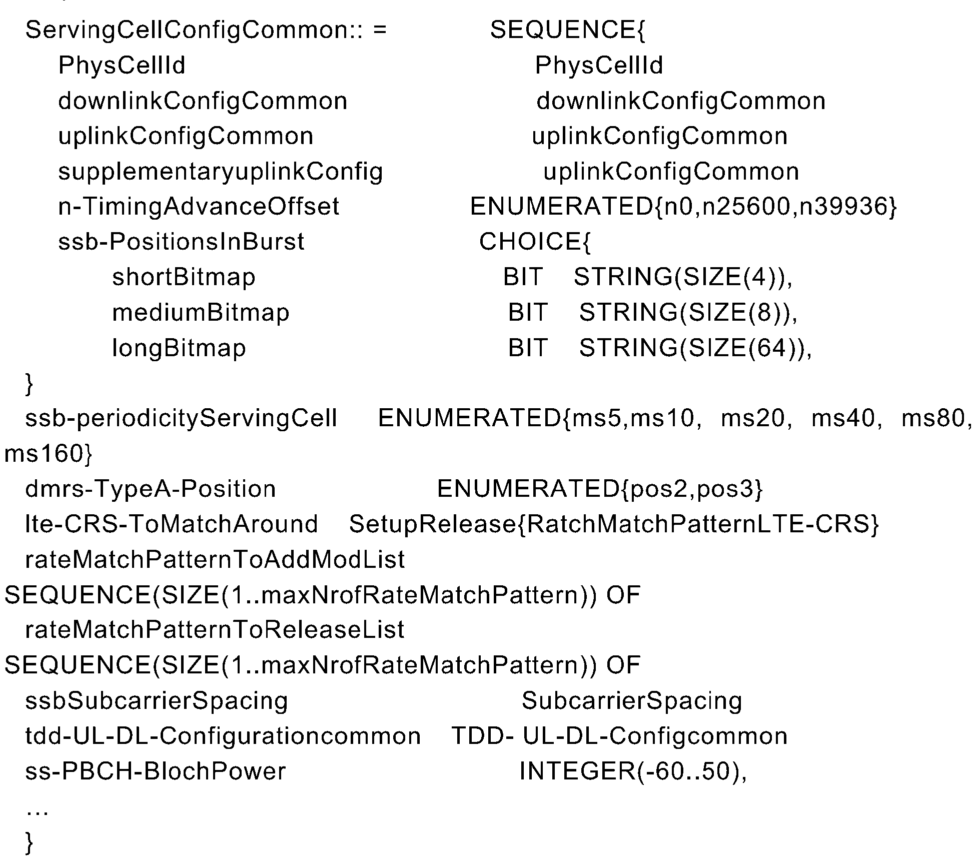

Exemplarily, Table 1 is an example of frequency information (frequency info DL (Downlink)) included in the RRC signaling below. The frequency information may be located in the Downlink Config Common field descriptions. The above Downlink Config Common field descriptions may also include other information (e.g., Initial Downlink BWP (Bandwidth Part)), which is not limited to the present disclosure.

**Table 1**

| DownlinkConfigCommon field descriptions |
|---|
| fresuencyinfoDL |
| Basic parameters of a downlink carrier and transmission there on. |
| InitialDownlinkBWP |
| The initialdownlink BWP configuration for a serving cell. The network configures the locationAndBandwidth so that the initial downlink BWP contains the entire CORSET#0 of this serving cell in the frequency domain. |

The above is a brief introduction to some concepts involved in the embodiments of the present disclosure.

Since the cellular network has the characteristics of improving spectrum utilization and facilitating expansion, the cellular network may be used as a basic network for mobile communications. In the cellular network (e.g., a single-layer cellular network or a multi-layer cellular network), as shown in FIG. 7A, respective cells are deployed independently. In view of this, if the terminal device moves, the terminal device needs to perform switching between a plurality of cells in the above-mentioned cellular network, so that the terminal device may continuously access cells with higher signal quality, thereby ensuring the quality of service of the terminal device. However, in the switching process of the current cell, the current service of the terminal device needs to be suspended to complete the switching. In this way, the current cell switching technology can only ensure that the terminal device does not experience excessively poor quality of service during movement (for example, the quality of service drops to the minimum value due to dropped calls), but it still affects service continuity to a certain extent and increase transmission latency of data.

In the embodiments of the present disclosure, the terminal device may combine at least two access points into an access point cluster. That is, as shown in FIG. 7B, the terminal device regards the at least two access points as a whole (i.e., the access point cluster). An access point may correspond to a cell. The terminal device may initiate a random access procedure through an access point (i.e., a first access point) with signal quality information satisfying a preset condition in the access point cluster, so that the terminal device may access the access point cluster. In this way, as shown in FIG. 7C, the terminal device may directly use a data service of at least one access point in the access point cluster at any time, without having to perform a switching process between respective access points or frequently suspending the service to complete the switching, which reduces a number of hard switching of the terminal device between respective access points, thereby improving service continuity and reducing transmission latency of data.

The technical solutions provided in the embodiments of the present disclosure may be applied to various communication systems, for example, new radio (New Radio, NR) communication system using the fifth generation mobile communication technology (5G), future evolutional system or multiple communication fusion systems, etc.

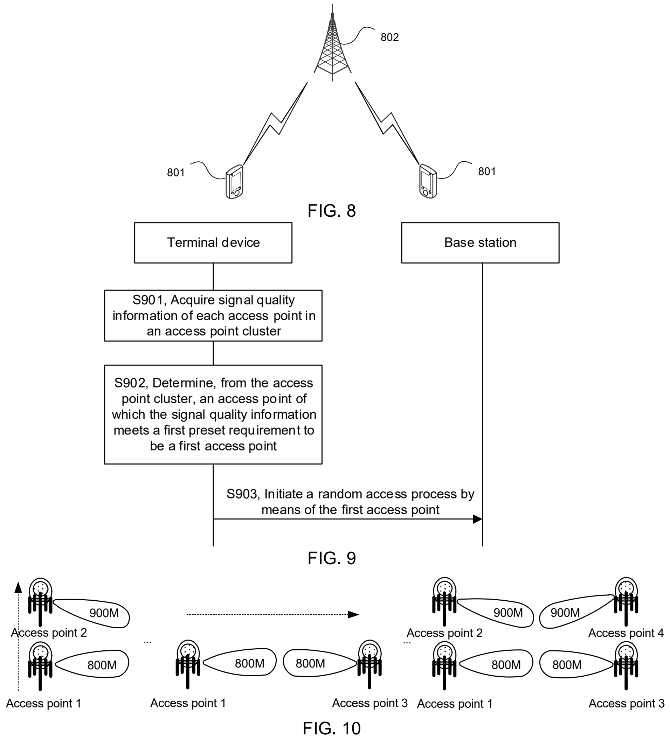

Exemplarily, FIG. 8 shows a structural schematic diagram of a communication system according to the embodiments of the present disclosure. The communication system may include at least one terminal device 801 and at least one base station 802. FIG. 8 only shows two terminal devices 801 and a base station 802.

The terminal device 801 is used to acquire signal quality information of respective access points in an access point cluster, determine an access point with signal quality information satisfying a first preset requirement from the access point cluster as a first access point, and initiate a random access procedure through the first access point, to access the access point cluster.

The base station 802 is used to perform a random access procedure with a terminal device through a first access point in the access point cluster, so that the terminal device accesses the access point cluster.

An access point cluster includes at least two access points.

In some examples, the base station 802 may be used to manage the access point cluster, so that base station 802 may also perform data transmission with the terminal device through at least one access point in the access point cluster, may also activate/deactivate access points in the access point cluster, and may also control a data transmission path between a core network and the terminal device.

In an implementation, the terminal device 801 is located within a coverage of the base station 802 and is connected to the base station 802. The terminal device 801 may be a terminal (terminal equipment), or a user equipment (UE), or a mobile station (MS), or a mobile terminal (MT), etc. For example, the terminal device 801 may be a mobile phone, a tablet computer, or a computer with a radio transceiver function, may also be a virtual reality (VR) terminal, an augmented reality (AR) terminal, a wireless terminal in industrial control, a wireless terminal in unmanned driving, a wireless terminal in remote medical, a wireless terminal in a smart grid, a wireless terminal in a smart city, a smart home, a vehicle terminal, etc. An apparatus in the embodiments of the present disclosure, for implementing the function of the terminal device 801 may be a terminal device 801, or may also be an apparatus (such as a chip system) capable of supporting the terminal device 801 to implement this function.

In an implementation, the base station 802 is mainly used to implement functions, such as resource scheduling, radio resource management, and radio access control, etc., of the terminal device 801. For example, the base station 802 may be any one of a small base station, a radio access point, a receiving and transmitting point (transmission and receiving point, TRP), a transmission point (TP), and some other access nodes.

It should be noted that, FIG. 8 is only an exemplary framework diagram, and a number of devices and names of the various devices included in FIG. 8 are not limited, and except the functional devices shown in FIG. 8, the communication system may also include other devices, and the present disclosure does not impose any limitation thereto.

The embodiments of the present disclosure do not limit application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

FIG. 9 is a flow chart of a communication method, according to the embodiments of the present disclosure and as shown in FIG. 9, the communication method may include S901 to S903.

In S901, a terminal device acquires signal quality information of respective access points in an access point cluster.

The access point cluster includes at least two access points.

As an implementation, an implementation process of the above S901 may be that: respective access points transmit reference signals to the terminal device. Correspondingly, the terminal device receives the reference signals of respective access points and measures the reference signals to obtain signal quality information of respective access points.

In some embodiments, frequencies corresponding to the respective access points in the access point cluster belong to a preset frequency set, and distances between the respective access points in the access point cluster are less than or equal to a distance threshold.

In combination with the above embodiments, an implementation process of the base station determining respective access points in the access point cluster may be that: the base station may arbitrarily determine an access point from a plurality of access points, and acquire a frequency of a remote radio unit (RRU) and/or an active antenna unit (AAU) to which the access point belongs and a location of the base station to which the access network belongs from a network device side. In this way, the base station may determine respective access points in the access network point based on a dimension of a frequency and a dimension of a location. The base station may determine the frequency of the RRU and/or AAU to which the access point belongs as a preset frequency, and determine a preset range based on the location of the base station. The base station may determine an access point with a frequency that is a preset frequency within the preset range, as an access point in the access network cluster.

Exemplarily, as shown in FIG. 10, the frequencies (i.e., preset frequencies) of the RRU and/or AAU to which the access point 1 belongs are 800 M and 900 M. The base station determines the preset range based on the location of access point 1, and determines access points with a frequency of 800M or 900M within the preset range as access points in the access network cluster (for example, access point 1, access point 2, access point 3, and access point 4).

In some embodiments, the signal quality information includes a transmitted signal strength and a received signal strength.

As an example, the above received signal strength may include at least one of: reference signal receiving power (RSRP), a received signal strength indicator (RSSI), and reference signal received quality (RSRQ).

It should be noted that, the signal quality information may also include other information (e.g., latency, power, etc.), and the present disclosure does not impose any limitation thereto.

In S902, the terminal device determines an access point with signal quality information satisfying a first preset requirement from the access point cluster as a first access point.

In some embodiments, if the signal quality information includes the transmitted signal strength and the received signal strength, the first preset requirement may include a difference between the transmitted signal strength and the received signal strength being less than or equal to a preset threshold.

In some other embodiments, if the above signal quality information includes the transmitted signal strength, the received signal strength, and a latency, the first preset requirement may include a difference between the transmitted signal strength and the received signal strength being less than or equal to the preset threshold, and the latency being less than or equal to a latency threshold.

In S903, the terminal device initiates a random access procedure through the first access point. Correspondingly, the base station performs a random access procedure with the terminal device through the first access point, so that the terminal device accesses the access point cluster.

As an implementation, an implementation process of the above S903 may be that: the terminal device may transmit access request information to the base station through the first access point; after the base station acknowledges that the terminal device may access the access cluster, the base station may transmit a downlink access indication to the terminal device through the first access point to inform the terminal device, to access the access point cluster.

As an example, the above random access procedure may be a random access procedure based on an uplink-physical random access channel (uplink-physical random access channel, UL-PRACH). The random access procedure based on the uplink-physical random access channel may include at least one of: a contention-based random access procedure and a non-contention-based random access procedure.

In the embodiments of the present disclosure, the terminal device may acquire the signal quality information of respective access points in the access point cluster, and initiate the random access procedure through an access point (i.e., the first access point) with the signal quality information satisfying the preset condition in the access point cluster, so that the terminal device may access the access point cluster. In this way, the terminal device may directly use a data service of at least one access point in the access point cluster at any time, without having to perform a switching process between respective access points or frequently suspending the service to complete the switch, which reduces a number of hard switching of the terminal device between respective access points, thereby improving service continuity and reducing transmission latency of data.

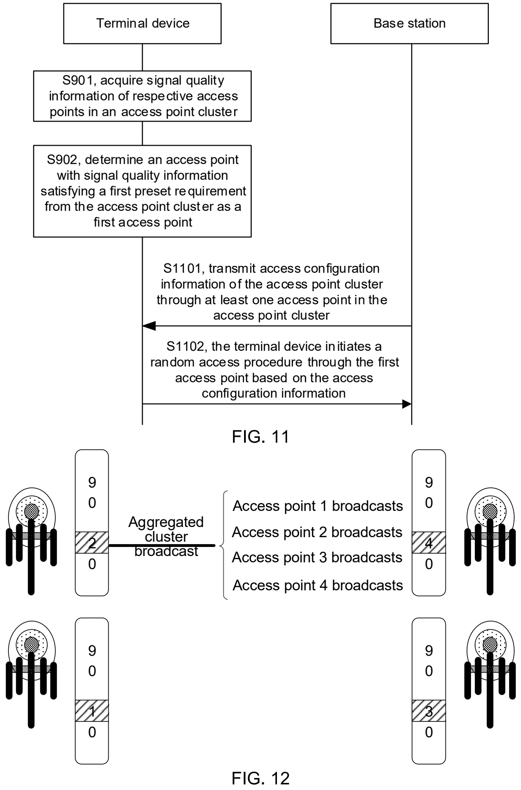

In conjunction with FIG. 9, as shown in FIG. 11, there is another communication method according to some embodiments of the present disclosure and the communication method includes S1101 and S1102 as follows.

In S1101, the base station transmits access configuration information of the access point cluster through at least one access point in the access point cluster. Correspondingly, the terminal device receives the access configuration information of the access point cluster.

As an implementation, an implementation process of the above S1101 may be that: the base station may arbitrarily select at least one access point from the access point cluster as a broadcasting access point, and transmit the access configuration information of the access point cluster based on the above broadcasting access point.

In some embodiments, the base station may determine different access points as broadcasting access points in different time periods. For example, as shown in FIG. 12, the base station may use access point 1 as a broadcasting access point in time period 1, use access point 2 as a broadcasting access point in time period 2, use access point 3 as a broadcasting access point in time period 3, and use access point 4 as a broadcasting access point in time period 4. In this way, in a total time period consisting of the time period 1, the time period 2, the time period 3, and the time period 4, the access point 1, the access point 2, the access point 3, and the access point 4 transmit the access configuration information of the access point cluster in sequence.

As another implementation, an implementation process of the above S1101 may be that: the base station may determine each access point in the access point cluster as a broadcasting access point, and transmit the access configuration information of the access point cluster based on each broadcasting access point.

In an embodiment, the access configuration information of the access point cluster includes a common configuration parameter of the access point cluster and dedicated configuration parameters of respective access points in the access point cluster. The dedicated configuration parameter of the access point includes at least one of: a random access channel identifier, a frequency, a bandwidth, and a random access preamble corresponding to the access point.

It may be understood that, in the current switching process, the base station stores the access configuration information of each access point independently. For example, as shown in Table 2 below, the access configuration information of a plurality of cells may include: access configuration information of access point 1 and access configuration information of access point 2. In the communication method provided in the embodiments of the present disclosure, the base station may use a same configuration parameter between the respective access points as the common configuration parameter of the access point cluster, and use different configuration parameters between the respective access points as the dedicated configuration parameters of the access points. For example, as shown in Table 3 below, the access configuration information of access point cluster 1 may include: a same configuration parameter between the access point 1 and the access point 2, and different configuration parameters between the access point 1 and the access point 2. Different configuration parameters between the access point 1 and the access point 2 may be stored independently.

**Table 2**

| Access point identifier | Parameter description |
|---|---|
| Access point 1 | Parameter 1, parameter 2, ..., parameter n |
| | Center frequency, ..., bandwidth |
| | Strategy 1, strategy 2, ..., strategy n |
| Access point 2 | Parameter 1, parameter 2, ..., parameter n |
| | Center frequency, ..., bandwidth |
| | Strategy 1, strategy 2, ..., strategy n |

**Table 3**

| Access point cluster identifier | Parameter category | Parameter description |
|---|---|---|
| Access point cluster 1 | Same configuration parameter between the access point 1 and the access point 2 (that is, the common configuration parameter of the access point cluster 1) | Parameter 1, parameter 2, ..., parameter n |
| Access point cluster 1 | Dedicated configuration parameters of the access point 1 | Parameter 1, parameter 2, ..., parameter n |
| | | Center frequency, ..., bandwidth |
| | | Strategy 1, strategy 2, ..., strategy n |
| Access point cluster 1 | Dedicated configuration parameters of the access point 2 | Parameter 1, parameter 2, ..., parameter n |
| | | Center frequency, ..., bandwidth |
| | | Strategy 1, strategy 2, ..., strategy n |

In S1102, the terminal device initiates a random access procedure through the first access point based on the access configuration information.

In some embodiments, an implementation process of the above S1102 may be that: the terminal device initiates the random access procedure through the first access point based on the common configuration parameter of the access point cluster and the dedicated configuration parameters of the first access point.

That is, the terminal device may initiate the random access procedure through the first access point based on complete access configuration information of the first access point. The complete access configuration information includes the same configuration parameter between the first access point and other access points in the access point cluster (i.e., the common configuration parameter of the access point cluster), and different configuration parameters between the first access point and other access points in the access point cluster (i.e., the dedicated configuration parameters of the access point cluster).

In the embodiments of the present disclosure, the terminal device may receive the access configuration information of the access point cluster and perform the random access procedure based on the access configuration information, which provides an implementation for the terminal device to initiate the random access procedure through the first access point, so that the terminal device and the access point cluster may establish a connection normally.

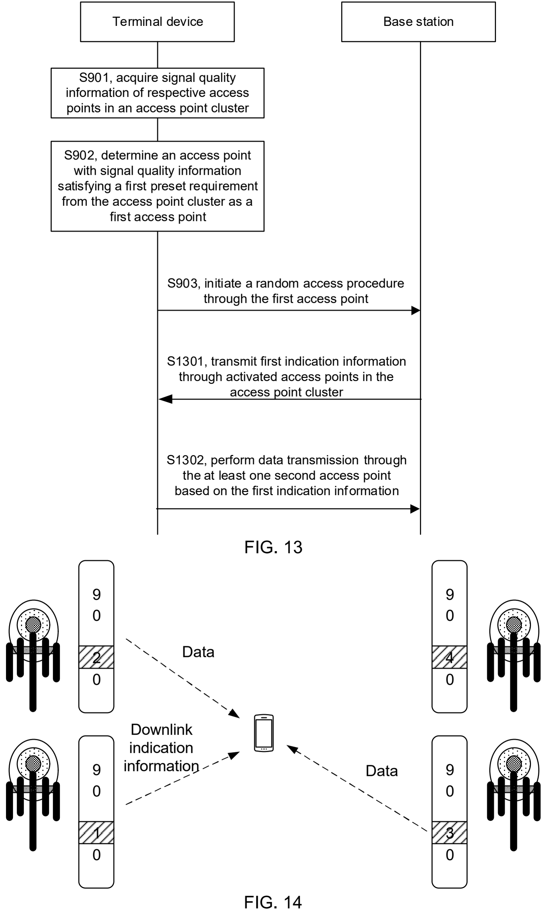

In conjunction with FIG. 9, as shown in FIG. 13, there is yet another communication method according to some embodiments of the present disclosure and the communication method includes S1301 and S1302 as follows.

In S1301, the base station transmits first indication information to the terminal device through activated access points in the access point cluster. Correspondingly, the terminal device receives the first indication information transmitted by the activated access point.

The first indication information is used to indicate at least one second access point in the access point cluster to provide a data service.

As an implementation, before S1301, an implementation process of the base station determining at least one second access point may be that: the base station may acquire a current location of the terminal device, and select first N access points closest to the terminal device from the access point cluster as to-be-selected access points based on the location of the terminal device, where N is a positive integer. The base station acquires current signal quality information of each to-be-selected access point among the N to-be-selected access points, and determines an access point with current signal quality information satisfying a data service requirement among the N to-be-selected access points as the second access point. The second access point may be one or more.

In some embodiments, the terminal device may autonomously select at least one second access point based on its own location information and locations of respective access points in the access point cluster, as well as the current signal quality information, and transmit the data service request message to the base station through the activated access point, where the data service request message is used to request at least one second access point to provide the data service for the terminal device.

In some embodiments, the above first indication information may include an uplink-physical random access channel (PRACH) identity document (ID) corresponding to each second access point among the at least one second access point.

Exemplarily, if the access point 1 and the access point 2 are both second access points, the PRACH ID corresponding to the access point 1 may be in the range of 0 to 10. The PRACH ID corresponding to the access point 2 may be in the range of 11 to 20.

It should be noted that, the above at least one second access point may include the first access point.

As an example, the first indication information may be downlink control information. As shown in FIG. 14, the base station transmits the downlink control information to the terminal device through the access point 1 and the downlink control information may be used to indicate the access point 2 and the access point 3 to provide the data service, so that the terminal device may receive data from the access point 2 and the access point 3.

In S1302, the terminal device performs data transmission through the at least one second access point based on the first indication information.

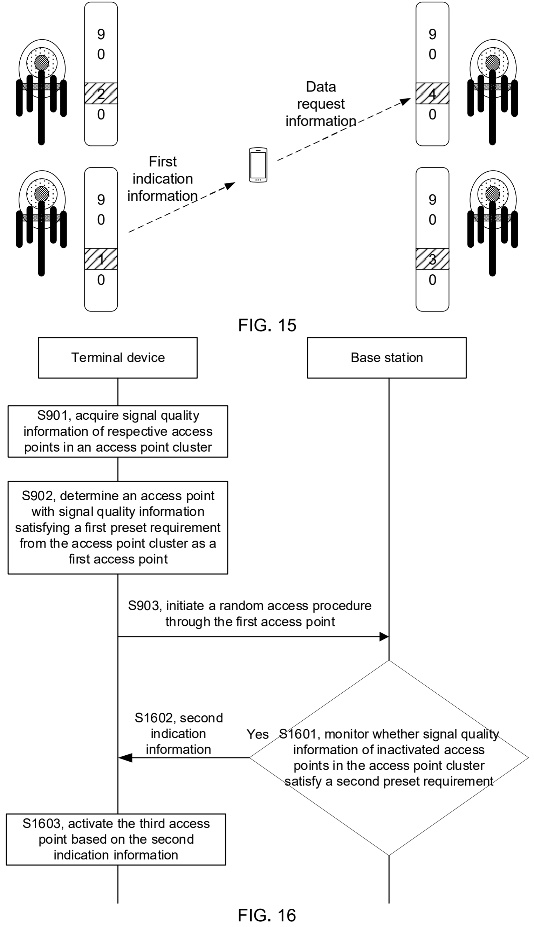

Exemplarily, as shown in FIG. 15, the first access point is the access point 1 in the access point cluster. If the first indication information is used to indicate the access point 4 in the access point cluster to provide the data service, the terminal device may transmit data request information to the access point 4.

In the embodiments of the present disclosure, the terminal device may receive relevant information (i.e., first indication information) of an access point that may provide the data service and transmitted from the activated access point in the access point cluster, and perform the data transmission with the base station through the above access point that may provide the data service based on the above first indication information. In this way, the terminal device may freely perform the data transmission with each second access point among the at least one second access point. Even if the terminal device moves, the terminal device does not need to perform the switching process and only needs to perform the data transmission through the above at least one second access point based on the first indication information, which reduces the number of hard switching of the terminal device between respective access points, thereby improving service continuity and reducing the transmission latency of the data.

In conjunction with FIG. 9, as shown in FIG. 16, there is yet another communication method according to some embodiments of the present disclosure. The communication method includes S1601 and S1603 as follows.

In S1601, the base station monitors whether signal quality information of inactivated access points in the access point cluster satisfy a second preset requirement.

As an implementation, the base station may transmit a signal quality measurement signal (e.g., a channel sounding reference signal (SRS)) to respective inactivated access points in the access point cluster. In response to the above signal quality measurement signal, the inactivated access point transmits its own signal quality information to the base station, so that the base station monitors whether the signal quality information of the inactivated access point in the access point cluster satisfies the second preset requirement.

As an implementation, the terminal device may collect the signal quality information broadcast by respective inactivated access points and transmit the signal quality information transmitted by the above respective inactivated access points to the base station, so that the base station may monitor whether the signal quality information of the inactivated access points in the access point cluster satisfies the second preset requirement.

In some embodiments, if the signal quality information includes power, the second preset requirement may be that power of the access point is greater than or equal to a preset power threshold. Regarding the preset power threshold, it may be set by the base station based on actual conditions, and the present disclosure does not impose any limitation thereto.

In S1602, in response to that signal quality information of a third access point among the inactivated access points satisfies the second preset requirement, the base station transmits second indication information to the terminal device. Correspondingly, the terminal device receives the second indication information.

The second indication information is used to indicate activating the third access point.

In some embodiments, the second indication information may be carried in a radio resource control (RRC) signaling, in media access control (MAC) control element (CE) information, or in downlink control information (DCI).

In S1603, the terminal device activates the third access point based on the second indication information.

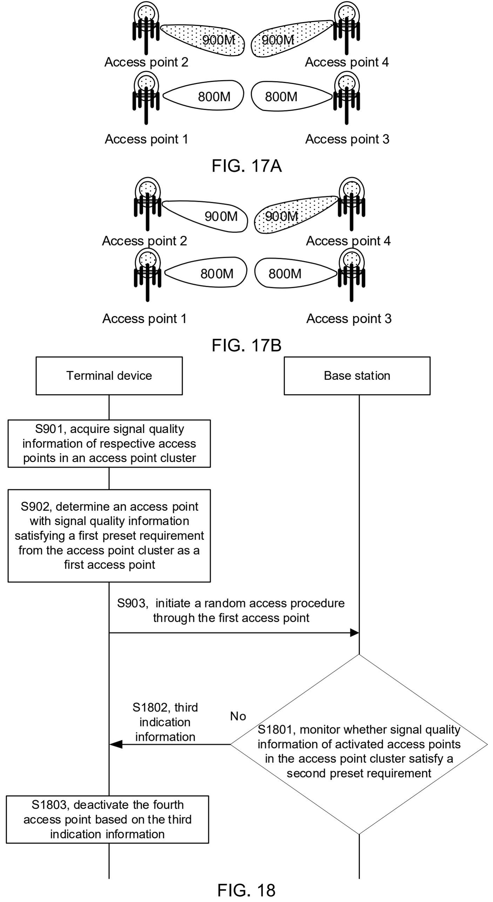

Exemplarily, as shown in FIG. 17A, activated access points in the access point cluster include access point 1 and access point 3, and inactivated access points in the access point cluster include access point 2 and access point 4. If the second indication information is used to activate the access point 2, the terminal device may activate the access point 2 based on the second indication information, so that the access point 2 may also provide data services for the terminal device. In this case, as shown in FIG. 17B, the activated access points in the access point cluster include access point 1, access point 2, and access point 3, and the inactivated access point in the access point cluster is access point 4.

In the embodiments of the present disclosure, in response to that the signal quality information of a certain inactivated access point (i.e., a third access point) in the access point cluster satisfies the second preset requirement, the terminal device may activate the third access point based on the second indication information transmitted by the base station, so that the third access point may also provide data services for the terminal device, thereby expanding the range of access points providing data services for the terminal device and further ensuring the service quality of the terminal device.

In conjunction with FIG. 9, as shown in FIG. 18, there is yet another communication method according to the embodiments of the present disclosure. The communication method includes S1801 to S1803 as follows.

In S1801, the base station monitors whether signal quality information of activated access points in the access point cluster satisfy a second preset requirement.

For the S1801, reference may be made to the description of the above S1601, which will not be repeated herein.

In S1802, in response to that signal quality information of a fourth access point among the activated access points does not satisfy the second preset requirement, the base station transmits third indication information to the terminal device. Correspondingly, the terminal device receives the third indication information.

The third indication information is used to indicate deactivating the fourth access point.

For the S1802, reference may be made to the description of the above S1602, which will not be repeated herein.

In S1803, the terminal device deactivates the fourth access point based on the third indication information.

Exemplarily, as shown in FIG. 17B, the activated access points in the access point cluster include access point 1, access point 2, and access point 3, and the inactivated access point in the access point cluster is access point 4. If the second indication information is used to deactivate the access point 2, the terminal device may deactivate the access point 2 based on the third indication information, so that the terminal device does not need the access point 2 to provide data services. In this case, as shown in FIG. 17A, activated access points in the access point cluster include access point 1 and access point 3, and inactivated access points in the access point cluster include access point 2 and access point 4.

In the embodiments of the present disclosure, in response to that signal quality information of a certain activated access point (i.e., the fourth access point) in the access point cluster does not satisfy the second preset requirement, the terminal device may deactivate the fourth access point based on the third indication information transmitted by the base station. In this way, in response to that the fourth access point can no longer provide a relatively high-quality data service for the terminal device, the fourth access point is deactivated, thereby saving the monitoring overhead of the base station on the fourth access point.

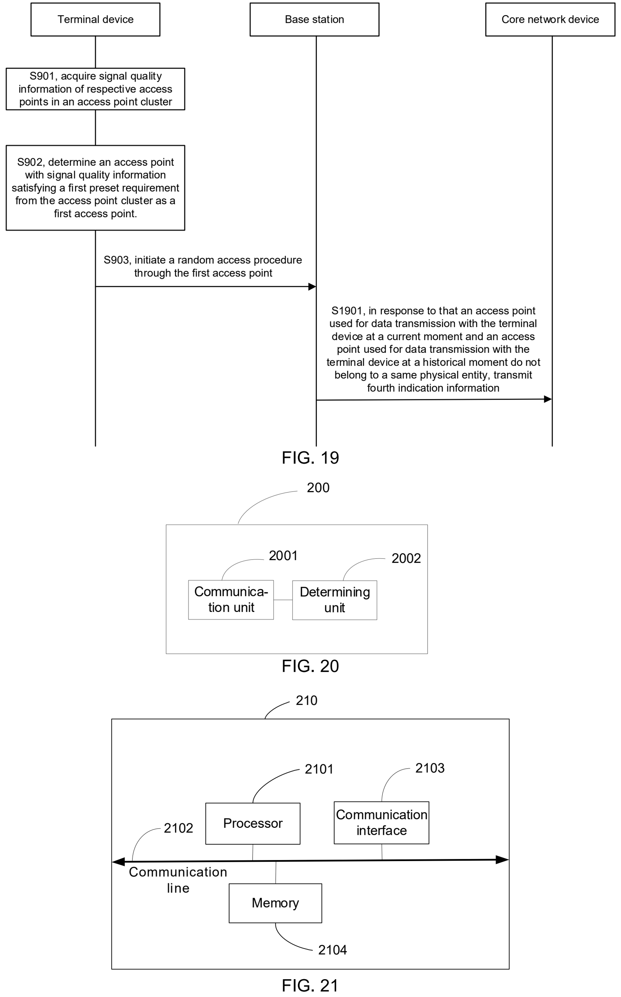

As shown in FIG. 19, there is yet another communication method according to the embodiments of the present disclosure. The communication method includes S1901 as follows: in response to that an access point used for data transmission with the terminal device at a current moment and an access point used for data transmission with the terminal device at a historical moment do not belong to a same physical entity, the base station transmitting fourth indication information to a core network device.

The fourth indication information is used to indicate switching a data transmission path between the core network and the terminal device.

It may be understood that, different access points may correspond to different physical entities. Before the base station performs the data transmission to the terminal device through the access point, the base station may judge whether the access point used for the data transmission to the terminal device at a current moment and the access point used for data transmission to the terminal device at a historical moment belong to a same physical entity.

If the access point used for data transmission with the terminal device at the current moment and the access point used for data transmission with the terminal device at the historical moment belong to the same physical entity, the base station does not need to indicate the core network device to change the data transmission path between the core network device and the terminal device, and may directly perform the data transmission based on the original data transmission path.

If the access point used for data transmission with the terminal device at the current moment and the access point used for data transmission with the terminal device at the historical moment do not belong to the same physical entity, the base station needs to transmit an indication message (i.e., a fourth indication message) to the core network device to indicate switching the data transmission path between the core network and the terminal device to avoid the problem of data transmission confusion.

In some examples, the above physical entity may include at least one of: a distributed unit (DU), and an Internet protocol (IP) communication device.

As an implementation, after S1901, the core network device may transmit response information of the fourth indication message to the base station. Correspondingly, the base station may receive the response information of the fourth indication message from the core network device.

In some embodiments, the fourth indication information may be carried in a path switch request transmitted by the base station to the core network device (e.g., an access and mobility management function (AMF)). The path switch request may also be carried in a switch request signaling. The response information for changing a logical link may be carried in a path switch request acknowledge transmitted by the core network device to the base station (e.g., AMF).

In the embodiments of the present disclosure, in response to that the access point used for data transmission with the terminal device at the current moment and the access point used for data transmission with the terminal device at the historical moment do not belong to the same physical entity, the base station transmits the fourth indication information used for indicating switching the data transmission path between the core network and the terminal device to the core network device, so that the subsequent core network may perform the data transmission with the terminal device based on a reasonable transmission path, thereby avoiding the problem of data transmission confusion.

It can be understood that, in order to implement the above functions, a communication apparatus contains corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is performed by hardware or by computer software driving hardware, depends on a specific application and a design constraint condition of the technical solution. Professional technicians may use different methods to implement the described functions for each specific application, but such an implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may also be integrated into one functional module. The above-mentioned integrated module may be implemented in the form of hardware or may also be implemented in the form of software. It should be noted that, the division of the modules in the embodiments of the present disclosure is schematic, which is only a logical functional division, and there may be other divisions in actual implementations. The example in which each functional module may be divided corresponding to each function is taken for explanation below.

FIG. 20 is a structural schematic diagram of a communication apparatus, according to the embodiments of the present disclosure, and the communication apparatus may perform the communication method provided in the above method embodiments. As shown in FIG. 20, the communication apparatus 200 includes: a communication unit 2001, and a determining unit 2002. The communication apparatus 200 may be configured to implement the functions of the terminal device and the base station in the above-mentioned embodiments.

The communication apparatus 200 in FIG. 20 may be configured to implement the structure of the terminal device in the above-mentioned embodiments.

The communication unit 2001 is configured to acquire signal quality information of respective access points in an access point cluster, where the access point cluster includes at least two access points.

The determining unit 2002 is configured to determine an access point with signal quality information satisfying a first preset requirement from the access point cluster as a first access point.

The determining unit 2002 is further configured to initiate a random access procedure through the first access point, to access the access point cluster.

In some embodiments, the signal quality information includes a transmitted signal strength and a received signal strength. The first preset requirement includes a difference between the transmitted signal strength and the received signal strength being less than or equal to a preset threshold.

In some embodiments, the communication unit 2001 is further configured to receive access configuration information of the access point cluster; and the determining unit 2002 is further configured to initiate the random access procedure through the first access point based on the access configuration information.

In some embodiments, the access configuration information of the access point cluster includes a common configuration parameter of the access point cluster and dedicated configuration parameters of respective access points in the access point cluster.

In some embodiments, the common configuration parameter of the access point cluster includes at least one of an identifier of the access point cluster, a data encryption type of the access point cluster, and a broadcasting parameter.

In some embodiments, the dedicated configuration parameter of the access point includes at least one of: a random access channel identifier, a frequency, a bandwidth, and a random access preamble corresponding to the access point.

In some embodiments, the determining unit 2002 is further configured to initiate the random access procedure through the first access point based on the common configuration parameter of the access point cluster and a dedicated configuration parameter of the first access point.

In some embodiments, the communication unit 2001 is further configured to receive first indication information transmitted by an activated access point, where the first indication information is used to indicate at least one second access point in the access point cluster to provide a data service; the determining unit 2002 is further configured to perform data transmission through the at least one second access point based on the first indication information.

In some embodiments, the communication unit 2001 is further configured to receive second indication information, where the second indication information is used to indicate activating a third access point; the determining unit 2002 is further configured to activate the third access point based on the second indication information, where signal quality information of the third access point satisfies a second preset requirement.

In some embodiments, the communication unit 2001 is further configured to receive third indication information, where the third indication information is used to indicate deactivating a fourth access point, where signal quality information of the fourth access point does not satisfy a second preset requirement; and the determining unit 2002 is further configured to deactivate the fourth access point based on the third indication information.

In some embodiments, frequencies corresponding to the respective access points in the access point cluster belong to a preset frequency set, and distances between the respective access points in the access point cluster are less than or equal to a distance threshold.

The communication apparatus 200 in FIG. 20 may be configured to implement the structure of the base station in the above-mentioned embodiments.

The determining unit 2002 is configured to indicate the communicating unit 2001 to perform a random access procedure with a terminal device through a first access point in the access point cluster, so that the terminal device accesses the access point cluster. The access point cluster includes at least two access points, and the first access point is an access point with signal quality information satisfying a first preset requirement in the access point cluster.

In some embodiments, the communication unit 2001 is further configured to transmit access configuration information of the access point cluster through at least one access point in the access point cluster.

In some embodiments, the access configuration information of the access point cluster includes a common configuration parameter of the access point cluster and dedicated configuration parameters of respective access points in the access point cluster.

In some embodiments, the common configuration parameter of the access point cluster includes at least one of an identifier of the access point cluster, a data encryption type of the access point cluster, and a broadcasting parameter.

In some embodiments, the dedicated configuration parameter of the access point includes at least one of: a random access channel identifier, a frequency, a bandwidth, and a random access preamble corresponding to the access point.

In some embodiments, the communication unit 2001 is further configured to transmit first indication information to the terminal device through an activated access point in the access point cluster, and the first indication information is used to indicate at least one second access point and/or the first access point in the access point cluster to provide the data service; the communication unit 2001 is further configured to perform data transmission with the terminal device through at least one second access point and/or the first access point.

In some embodiments, the determining unit 2002 is further configured to monitor whether signal quality information of inactivated access points in the access point cluster satisfy a second preset requirement; in response to that signal quality information of a third access point among the inactivated access points satisfies the second preset requirement, the communication unit 2001 is further configured to transmit second indication information to the terminal device, where the second indication information is used to indicate activating the third access point.

In some embodiments, the determining unit 2002 is further configured to monitor whether signal quality information of activated access points in the access point cluster satisfy the second preset requirement; in response to that signal quality information of a fourth access point among the activated access points does not satisfy the second preset requirement, the communication unit 2001 is further configured to transmit third indication information to the terminal device, where the third indication information is used to indicate deactivating the fourth access point.

In some embodiments, frequencies corresponding to the respective access points in the access point cluster belong to a preset frequency set, and distances between the respective access points in the access point cluster are less than or equal to a distance threshold.

In some embodiments, the determining unit 2002 is further configured to determine whether a physical entity to which any one of access points belongs is a preset physical entity.

In response to that the physical entity to which any one of access points belongs is not the preset physical entity, the communication unit 2001 is further configured to transmit a fourth indication message to a core network device. The fourth indication message is used to request the core network device to perform the data transmission to any one of access points based on a logical link of a preset physical entity.

During implementation, the devices in FIG. 8 may each adopt the composition structures shown in FIG. 21, or include the components shown in FIG. 21. FIG. 21 is a schematic diagram of components of a communication apparatus 210, according to the embodiments of the present disclosure. As shown in FIG. 21, the communication apparatus 210 may include a processor 2101, a communication line 2102, a communication interface 2103, and a memory 2104. The processor 2101, the memory 2104 and the communication interface 2103 may be connected by the communication line 2102.

The processor 2101 is a central processing unit (CPU), a general-purpose processor, a network processor (NP), a digital signal processor (DSP), a microprocessor, a microcontroller, a programmable logic device (PLD), or any combination thereof. The processor 2101 may also be other apparatuses with processing functions, such as a circuit, a device or a software module, which is not limited thereto.

The communication line 2102 is configured to transfer information between the components included in the communication apparatus 210.

The communication interface 2103 is configured to communicate with other devices or other communication networks. The other communication networks may be the Ethernet, radio access network (RAN), wireless local area networks (WLAN), etc. The communication interface 2103 may be a module, a circuit, a communication interface, or any apparatus capable of implementing communication.

The memory 2104 is configured to store instructions. The instructions may be a computer program.

The memory 2104 may be a read-only memory (ROM) or other types of static storage devices that may store static information and instructions, or a random access memory (RAM) or other types of dynamic storage devices that may store information and instructions, or may also be an electrically erasable programmable read-only memory (EEPROM), a compact disc read-only memory (CD-ROM) or other optical disc storages, optical disc storages (including a compact optical disc, a laser disc, an optical disc, a digital versatile disc, a Blu-ray disc, or the like), a magnetic disk storage medium or other magnetic storage devices, etc., which is not limited thereto.

It should be noted that, the memory 2104 may exist independently of the processor 2101, or may be integrated with the processor 2101. The memory 2104 may be configured to store instructions or program codes or some data, etc. The memory 2104 may be located inside the communication apparatus 210 or outside the communication apparatus 210, which is not limited thereto. The processor 2101 is configured to execute the instructions stored in the memory 2104 to implement the communication method provided in the above-mentioned embodiments of the present disclosure.

In an example, the processor 2101 may include one or more CPUs, e.g., CPU0 and CPU1.

As an implementation, the communication apparatus 210 includes a plurality of processors.

As an implementation, the communication apparatus 210 further includes an output device and an input device. Exemplarily, the input device is a device such as a keyboard, a mouse, a microphone or a joystick, etc., and the output device is a device such as a display screen and a speaker, etc.

It should be noted that, the communication apparatus 210 may be a desktop computer, a portable computer, a network server, a mobile phone, a tablet computer, a wireless terminal, an embedded device, a chip system or a device with similar structures as shown in FIG. 21. In addition, the component structures shown in FIG. 21 do not constitute a limitation on the various devices in FIG. 1 and FIG. 21, and in addition to the components shown in FIG. 21, the various devices in FIG. 20 and FIG. 21 may include more or fewer components than shown in the figures, or combine certain components, or include different component arrangements.

In the embodiments of the present disclosure, the chip system may be formed by a chip, or may also include a chip and other discrete devices. Some embodiments of the present disclosure further provide a computer-readable storage medium (e.g., a non-transitory computer-readable storage medium) having stored computer program instructions therein, where the computer program instructions, when executed on a computer, cause the computer to perform the communication method as described in any one of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine readable storage medium" may include, but be not limited to, a radio channel and various other media capable of storing, containing, and/or carrying instructions and/or data.

Some embodiments of the present disclosure also provide a computer program product containing instructions, and the computer program product, when running on a computer, causes the computer to perform the communication method as described in any one of the above-mentioned embodiments.

In the embodiments of the present disclosure, the terminal device may acquire the signal quality information of respective access points in the access point cluster, and initiate the random access procedure through an access point (i.e., the first access point) with the signal quality information satisfying the preset condition in the access point cluster, so that the terminal device may access the access point cluster. In this way, the terminal device may directly use a data service of at least one access point in the access point cluster at any time, without having to perform a switching process between respective access points or frequently suspending the service to complete the switching, which reduces a number of hard switching of the terminal device between respective access points, thereby improving service continuity and reducing transmission latency of data.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure should be based on the protection scope of the claims.

## Claims

1. A communication method, **characterized in that** the method is applied to a terminal device, and comprises:
acquiring signal quality information of respective access points in an access point cluster, wherein the access point cluster comprises at least two access points;
determining an access point with signal quality information satisfying a first preset requirement from the access point cluster as a first access point; and
initiating a random access procedure through the first access point, to access the access point cluster.

2. The method according to claim 1, wherein the signal quality information comprises a transmitted signal strength and a received signal strength;
the first preset requirement comprises a difference between the transmitted signal strength and the received signal strength being less than or equal to a preset threshold.

3. The method according to claim 1, wherein initiating the random access procedure through the first access point comprises:
receiving access configuration information of the access point cluster; and
initiating the random access procedure through the first access point based on the access configuration information.

4. The method according to claim 3, wherein the access configuration information of the access point cluster comprises a common configuration parameter of the access point cluster and dedicated configuration parameters of respective access points in the access point cluster.

5. The method according to claim 4, wherein the common configuration parameter of the access point cluster comprises at least one of an identifier of the access point cluster, a data encryption type of the access point cluster, and a broadcasting parameter.

6. The method according to claim 4, wherein the dedicated configuration parameters of the respective access points comprise at least one of random access channel identifiers, frequencies, bandwidths, and random access preambles corresponding to the respective access points.

7. The method according to any one of claims 4 to 6, wherein initiating the random access procedure through the first access point based on the access configuration information comprises:
initiating the random access procedure through the first access point based on the common configuration parameter of the access point cluster and a dedicated configuration parameter of the first access point.

8. The method according to claim 1, further comprising:
receiving first indication information transmitted by an activated access point, wherein the first indication information is used to indicate at least one second access point in the access point cluster to provide a data service; and
performing data transmission through the at least one second access point based on the first indication information.

9. The method according to claim 1, further comprising:
receiving second indication information, wherein the second indication information is used to indicate activating a third access point; and
activating the third access point based on the second indication information, wherein signal quality information of the third access point satisfies a second preset requirement.

10. The method according to claim 1, further comprising:
receiving third indication information, wherein the third indication information is used to indicate deactivating a fourth access point, wherein signal quality information of the fourth access point does not satisfy a second preset requirement; and
deactivating the fourth access point based on the third indication information.

11. The method according to claim 1, wherein frequencies corresponding to the respective access points in the access point cluster belong to a preset frequency set, and distances between the respective access points in the access point cluster are less than or equal to a distance threshold.

12. A communication method, **characterized in that** the method is applied to a base station and comprises:
performing a random access procedure with a terminal device through a first access point in an access point cluster, so that the terminal device accesses the access point cluster, wherein the access point cluster comprises at least two access points, and the first access point is an access point with signal quality information satisfying a first preset requirement in the access point cluster.

13. The method according to claim 12, further comprising:
transmitting access configuration information of the access point cluster through at least one access point in the access point cluster.

14. The method according to claim 13, wherein the access configuration information of the access point cluster comprises a common configuration parameter of the access point cluster and dedicated configuration parameters of respective access points in the access point cluster.

15. The method according to claim 14, wherein the common configuration parameter of the access point cluster comprises at least one of an identifier of the access point cluster, a data encryption type of the access point cluster, and a broadcasting parameter.

16. The method according to claim 14, wherein the dedicated configuration parameters of the respective access points comprise at least one of random access channel identifiers, frequencies, bandwidths, and random access preambles corresponding to the respective access points.

17. The method according to claim 12, further comprising:
transmitting first indication information to the terminal device through an activated access point in the access point cluster, wherein the first indication information is used to indicate at least one second access point in the access point cluster to provide a data service; and
performing data transmission with the terminal device through the at least one second access point.

18. The method according to claim 12, further comprising:
monitoring whether signal quality information of inactivated access points in the access point cluster satisfy a second preset requirement; and
in response to that signal quality information of a third access point among the inactivated access points satisfies the second preset requirement, transmitting second indication information to the terminal device, wherein the second indication information is used to indicate activating the third access point.

19. The method according to claim 12, further comprising:
monitoring whether signal quality information of activated access points in the access point cluster satisfy a second preset requirement; and
in response to that signal quality information of a fourth access point among the activated access points does not satisfy the second preset requirement, transmitting third indication information to the terminal device, wherein the third indication information is used to indicate deactivating the fourth access point.

20. The method according to claim 12, wherein frequencies corresponding to the respective access points in the access point cluster belong to a preset frequency set, and distances between the respective access points in the access point cluster are less than or equal to a distance threshold.

21. The method according to claim 12, further comprising:
in response to that an access point used for data transmission with the terminal device at a current moment and an access point used for data transmission with the terminal device at a historical moment do not belong to a same physical entity, transmitting fourth indication information to a core network device, wherein the fourth indication information is used to indicate switching a data transmission path between the core network and the terminal device.

22. A communication apparatus, **characterized by** comprising: a processor and a memory for storing instructions executable for the processor;
wherein the processor is configured to execute the instructions, so that the communication apparatus performs the method according to any one of claims 1 to 21.

23. A computer readable storage medium, **characterized in that** the computer readable storage medium has stored computer instructions thereon, and the computer instructions, when executed on a computer, cause the computer to perform the method according to any one of claims 1 to 21.
